# EUROPÄISCHE PATENTSCHRIFT

(11) **EP 4 310 028 B1**
(45) Veröffentlichungstag und Bekanntmachung des Hinweises auf die Patenterteilung: **21.10.2026**
(21) Anmeldenummer: 23185584.2
(22) Anmeldetag: 14.07.2023
(51) Int. Cl.: B65G 19/02, B65G 19/20, B65G 19/24

(54) **BEHÄLTERZUFÜHRSYSTEM ZUM TRANSPORT VON BEHÄLTERN**
CONTAINER SUPPLY SYSTEM FOR TRANSPORTING CONTAINERS
SYSTÈME D'ALIMENTATION DE RÉCIPIENTS POUR LE TRANSPORT DE RÉCIPIENTS

(30) Priorität: 19.07.2022 EP 22185616
(43) Veröffentlichungstag der Anmeldung: 24.01.2024
(73) Patentinhaber: Ferrum Packaging AG, 5503 Schafisheim (CH)
(72) Erfinder: Schönenberg, Simon, 5400 Baden (CH)
(74) Vertreter: IPS Irsch AG

(56) Entgegenhaltungen:
- EP-B1- 2 550 119
- EP-B1- 2 818 434
- DE-A1- 2 413 661
- JP-A- H0 769 439
- JP-U- S5 730 210
- US-A1- 2015 239 669
- US-B1- 9 694 980

## Beschreibung

Die Erfindung betrifft ein Behälterzuführsystem zum Transport eines Behälters, eine Verarbeitungsvorrichtung zur Verarbeitung des Behälters und ein Verfahren zum Transport von Behältern gemäss dem Oberbegriff der unabhängigen Ansprüche.

Ein gattungsgemässes Behälterzuführsystem zum Transport eines Behälters zu einem Behälterempfänger ist beispielsweise in der DE 4236784 A1 offenbart.

In der Nahrungsmittelindustrie ist es üblich, für einen solchen Transport auf eine Produktionsstrasse zurückzugreifen. Hierbei wird von einem Behälterbereitstellsystem ein Behälter an ein Behälterzuführsystem abgegeben. Dieses System führt den Behälter dann einer Behälterverarbeitungsvorrichtung zu. Durch diese Behälterverarbeitungsvorrichtung wird das betreffende Lebensmittel in den Behälter gefüllt und / oder der Behälter mit einem Deckel verschlossen.

Vor allem in der Getränkeindustrie besteht die gängige Praxis darin, Getränkedosen nach dem Füllprozess mittels eines Behälterzuführsystems in Form eines sogenannten Einführtischs in ein Verschliessmodul (auch Behälterverschliesser) eines Dosenverschliessers zu fördern. Dieser Einführtisch besteht aus einem Gleitband, auf dem die Dosen stehend angeordnet werden und mittels Kettenmitnehmer transportiert werden. Um ein seitliches Ausbrechen des Dosenstroms zu verhindern, begrenzen Seitenführungsleisten eine seitliche Bewegung der Dosen.

Im Verschliessmodul gelangen die noch offenen Behälter auf die sogenannte Falzstation, wo sie mit einem Deckel beaufschlagt und gleichzeitig der Kopfraum des Behälters mit einem Schutzgas bzw. Inertgas begast wird, um die Haltbarkeit des Produktes sicherzustellen. Anschliessend wird der Behälter auf der Falzstation in Rotation versetzt, während die Falzstation gleichzeitig um die Zentralachse des Verschliessmoduls rotiert. Da in der Praxis meistens mehrere Falzstationen auf einem karussellartigen Mittelteil des Verschliessmoduls im Einsatz sind, werden höhere Verschliessleistungen möglich.

Dosenverschliesser sind zum Beispiel aus der DE 749636 und der DE4234115 A1 bekannt. Dosenverschliesser umfassen eine Einspannvorrichtung zur Aufnahme einer zu verschliessenden Dose. Im Betriebszustand ist die zu verschliessende Dose in die Einspannvorrichtung eingebracht und durch diese in axialer und radialer Richtung gesichert. Ebenso ist ein Dosendeckel über der Dosenöffnung des zu verschliessenden Dosenkörpers zentriert eingebracht. Der Dosenkörper weist im Bereich der Dosenöffnung einen umlaufenden Dosenflansch und der Dosendeckel einen umlaufenden Dosendeckelflansch auf. Zum Verschliessen der Dosenöffnung durch den Dosendeckel umfasst der Dosenverschliesser zusätzlich zwei um jeweils eine Achse drehbar gelagerte Falzrollen, die den Dosenflansch und den Dosendeckelflansch mittels einer im wesentlichen radial wirkenden Kraft miteinander verpressen, wobei die Verpressung durch ein kontinuierliches Abrollen in Umfangsrichtung entlang des Umfangs der Dosenöffnung erfolgt.

Zum besseren Verständnis der vorliegenden Erfindung wird im Folgenden zunächst ein aus dem Stand der Technik bekanntes Behälterzuführsystem in Form eines Einführtischs gemäss DE 42 36 784 A1 anhand der Fig. 1 beschrieben. Der zuvor kurz beschriebene Einführtisch könnte beispielweise im Wesentlichen so ausgestaltet sein.

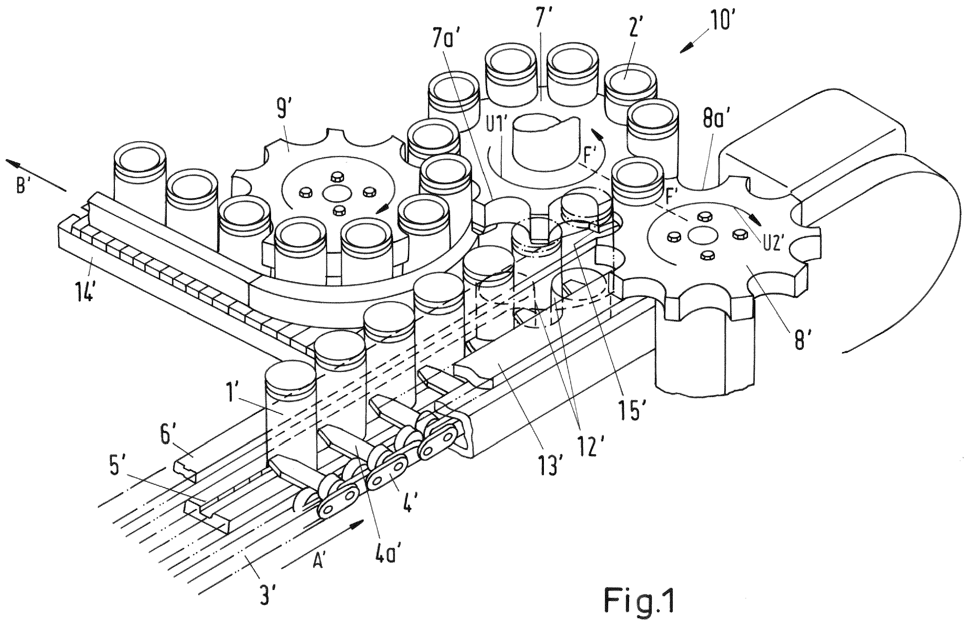

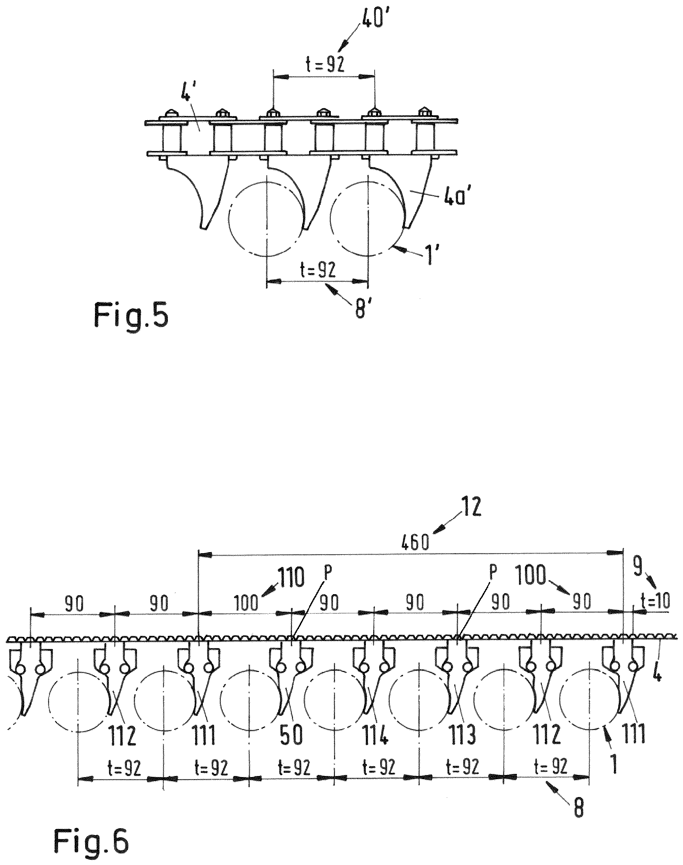

Zur besseren Unterscheidung des bekannten Standes der Technik von der vorliegenden Erfindung werden im Rahmen dieser Anmeldung Bezugszeichen zu Merkmalen bekannter Vorrichtungen mit einem Hochkomma (in Fig. 1 und 5) versehen, während Merkmale zu erfindungsgemässen Vorrichtungen oder deren Bestandteilen kein Hochkomma tragen.

Bei dem bekannten Transportmodul 3' gemäss Fig. 1 wird ein zuvor in einer nicht dargestellten Füllvorrichtung mit Inhalt befüllter Behälter 1', im vorliegenden Beispiel eine metallische Dose 1' zur Aufnahme eines Getränkes oder zur Aufnahme eines anderen Lebensmittels oder eines anderen beliebigen Produktes durch einen an einer Antriebskette 4' angebrachten Finger 4a' auf einer Schiene 5' des Transmoduls 3' in Richtung A' geschoben. Die Dose 1' wird dabei an ihren gegenüber liegenden Seiten durch eine Führungsleiste 6' und eine kettenseitige Führungsleiste 13' geführt. Sodann wird die Dose 1' auf einen Dosenheber 12' eines Verschliessmoduls 10', welches sich synchron mit dem Transportmodul 3' bewegt, übertragen und tritt in eine Ausnehmung 7a' eines Verschliessdrehkopfes 7' ein, der sich in Umfangsrichtung U1' dreht. Beim Eintritt in den Verschliessdrehkopf 7' halten eine Ausnehmung 8a', 15' eines gegenüberliegenden Drehkopfes 8' bzw. Gegendrehkopfes 8', der bevorzugt an einer zum Verschliessdrehkopf 7' symmetrischen Position angeordnet ist und sich mit dem Verschliessdrehkopf 7' synchronisiert in umgekehrter Drehrichtung U2' dreht, und die Ausnehmung 7a' des Verschliessdrehkopfes 7' die Dose 1' auf einer Linie F'-F' von gegenüberliegenden Seiten her in Position und zentrieren die Dose 1' in einer zum Verschliessen oder Bördeln geeigneten Position. Nachdem ein Behälterdeckel 2' mittels einer nicht dargestellten Verschliess- bzw. Bördelrolle mit dem Behälter 1' verbördelt wurde, bewegt sich der mit dem Behälterdeckel 2' verschlossene Behälter 1' über einen Auswerferdrehkopf 9' und eine Auswurfschiene 14' in Richtung B' über einen Dosenauswerferförderer 9' und wird dann dem nächsten Schritt im Ablauf bzw. Prozess zugeführt.

Der Transport der Behälter zum Behälterempfänger erfolgt also üblicherweise, indem der Behälter auf einer Transportschiene von dem Behälterbereitstellsystem zu dem Behälterempfänger (also entlang einer Transportstrecke) gleitet, wobei der Behälter von einem Mitnehmer z.B. einem Finger geführt wird. Dieser Finger ist mit einer Kette verbunden (sogenannter Kettenmitnehmer), die entlang der Transportschiene angeordnet ist. Die Kette ist vorzugsweise umlaufend und an Umlenkrollen oder anderen Bauteilen angebracht, die es ermöglichen, dass die Kette durch einen Antrieb bewegt werden kann. Die Kette ist dabei eine Rollkette, welche über eine Abrollfläche geführt wird.

Diese aus dem Stand der Technik bekannten Vorrichtungen bringen einige Nachteile mit sich.

Der Kettenantrieb, der für den Transport des Behälters benötigt wird, produziert Abrieb (an der Kette und der Abrollfläche), der genauso wie das für die Kette benötigte Schmiermittel in die Behälter gelangen kann und so zu Verunreinigungen führen kann. Zusätzlich bereitet die Reinigung der Kette Probleme, da zwischen den einzelnen Gliedern Toträume vorhanden sind, welche Raum für Verunreinigungen bieten und von Mikroorganismen besiedelt werden können. Wie bei allen Abfüllvorgängen besteht auch bei der Abfüllung von Lebensmitteln die Gefahr, dass Füllmaterial verschüttet wird. Da jedes Verschütten von Lebensmitteln jedoch ein beschleunigtes Wachstum von Mikroorganismen nach sich zieht, ist eine regelmässige Reinigung erforderlich. Die Reinigung der Kette ist naturgemäss gleichbedeutend mit einem Stillstand der Anlage, der aus Kostengründen vermieden werden soll.

Ausserdem hat sich über die Jahre zudem eine spezifische Kettenteilung, zum Beispiel 92 mm etabliert, um einen sauberen Übergang der Dosen auf die Hubstationen zu gewährleisten. Diese Teilung hat einen kleinen Bereich, in dem sie abweichen kann. Dabei muss die Teilung grösser sein als die Teilung des vorherigen Systems (in der Regel ein Füller) und kleiner als die des nachkommenden Systems (in der Regel ein Verschliesser). Dies ist essenziell damit die Übergabe von einem System in das Nächste sauber funktioniert. Nach aktuellem Stand der Technik ist man daher auf gängige Kettenteilungen angewiesen sowie auf speziell angefertigte Ketten mit einer entsprechenden Teilung. Diese Tatsache erschwert die Realisierung alternativer Zugelemente, welche andere Teilungen aufweisen. Aufgrund dieser Tatsache kann der Transportabstand, das heisst der Abstand zwischen den einzelnen Behältern, nicht konstant gehalten werden und somit ist kein sauberer Übergang der Dosen auf die Hubstation gewährleistet. Daher sind Systeme, die mit dem Stand der Technik ausgestattet sind, unflexibel in Bezug auf die Wahl des Zugelements.

Aus der US 2015/239669 A1 ist ein System gemäß dem Oberbegriff des Anspruchs 1 und ein Förderband zum Transport von Artikeln bekannt, welches unterschiedlich ausgeformte Mitnehmer aufweist.

Ausgehend vom nächstliegenden Stand der Technik besteht die Aufgabe der Erfindung darin, ein Behälterzuführsystem, eine Verarbeitungsvorrichtung und Verfahren zum Transport von Behältern bereitzustellen, welche die aus dem Stand der Technik bekannten nachteiligen Wirkungen vermeiden. Im Speziellen soll ein Behälterzuführsystem flexibel an die verschiedenen, in Gebrauch befindlichen Verschliessmodule anpassbar und mit diesen verwendbar sein, sodass alle Verschliessmodule optimal mit zu verschliessenden Behältern versorgt werden können.

Diese Aufgabe wird durch ein erfindungsgemässes Behälterzuführsystem, eine erfindungsgemässe Verarbeitungsvorrichtung sowie das erfindungsgemässe Verfahren gelöst.

Erfindungsgemäss wird ein Behälterzuführsystem zum Transport von Behältern (insbesondere von Dosen) entlang einer Transportstrecke vorgeschlagen. Die Transportstrecke befindet sich dabei vorzugsweise zwischen der Behälterquelle und dem Behälterempfänger und entspricht der vom Behälter zurückgelegten Strecke.

Das Behälterzuführsystem umfasst ein Zugelement, das entlang der Transportstrecke bewegbar ist und eine erste Vielzahl von Mitnehmern. Zusätzlich umfasst das Behälterzuführsystem weiter eine zweite von der ersten unterschiedliche Vielzahl von Mitnehmern, wobei die erste Vielzahl von Mitnehmern und die zweite Vielzahl von Mitnehmem an Befestigungspunkten des Zugelements angeordnet sind.

Bei der Anordnung der Mitnehmer an dem Zugelement bilden die Befestigungspunkte von zwei nebeneinander an dem Zugelement angeordneten Mitnehmern der ersten Vielzahl einen ersten Befestigungsabstand und die Befestigungspunkte von einem Mitnehmer der ersten Vielzahl und einem neben dem Mitnehmer der ersten Vielzahl an dem Zugelement angeordneten Mitnehmer der zweiten Vielzahl einen zweiten Befestigungsabstand. Dabei weisen die Mitnehmer der zweiten Vielzahl eine derart von den Mitnehmern der ersten Vielzahl abweichende Form auf, dass der Abstand zwischen nebeneinander entlang der Transportstrecke führbaren Behältern unabhängig von dem ersten Befestigungsabstand und zweiten Befestigungsabstand der Mitnehmer ist und konstant bleibt. Hierbei ist insbesondere der Abstand (auch Transportabstand) zwischen (direkt) nebeneinander entlang der Transportstrecke führbaren / transportierbaren Behältern bei unterschiedlichem ersten Befestigungsabstand und zweiten Befestigungsabstand konstant.

Die verschiedenen Vielzahlen von Mitnehmern sind derart an dem Zugelement verteilt, dass die Behälter bei der Bewegung des Zugelementes durch die erste Vielzahl von Mitnehmern und die zweite Vielzahl von Mitnehmern aufgenommen werden und entlang der Transportstrecke transportiert werden können.

Durch den Einsatz von alternativen Zugelementen können die Kosten reduziert werden sowie Standzeiten aufgrund von Reinigungsarbeiten verringert beziehungsweise vermieden werden. Des Weiteren können die Hygienestandards aufgrund der erleichterten Reinigung eines zur Kette alternativen Zugelementes erhöht werden. Der Einsatz von alternativen Zugelementen wird dabei insbesondere ermöglicht, da anstelle von einer Vielzahl von gleichen Mitnehmern unterschiedliche (ausgeformte) Mitnehmer verwendet werden.

Hierbei kann das Zugelement ein Seil, ein Band oder ein Riemen, besonders bevorzugt ein Zahnriemen sein. Im Rahmen der Erfindung kann ein «Zahnriemen» als ein Triebriemen mit Zahnung, welcher formschlüssig in gezahnten Riemenscheiben läuft, verstanden werden. Ein Zahnriemen vereint die technischen Eigenschaften einer Kette und eines Flachriemens. An der Innenseite eines Zahnriemens befinden sich Zähne, welche insbesondere ein Elastomer umfassen. Aufgrund dieser Zähne folgt eine bestimmte Teilung des Zahnriemens, wobei diese durch den Abstand zwischen den Zähnen definiert wird. Die Mitnehmer können in Zwischenräumen zwischen den Zähnen angebracht sein, also dort ist ihr Befestigungspunkt. Die Befestigungspunkte befinden sich also zwischen den Zähnen des Zahnriemens. Vorzugsweise wird für die Befestigung der Mitnehmer jedoch ein Zahn abgefräst. Anschliessend wird der Zahnriemen gestanzt. Durch die Stanzung wird dann ein Ersatzzahn eingesetzt, an welchem der Mitnehmer befestigt wird.

Die Mitnehmer können an das Zugelement geschraubt, geklemmt oder genietet werden. Dies sollen nur einige beispielhafte Befestigungsmöglichkeiten aufzeigen und schliessen keinesfalls andere Arten der Befestigung aus.

Die unterschiedliche Form der Mitnehmer ergibt sich insbesondere aus einem konstanten Transportabstand der Behälter bei nicht konstanten Befestigungsabständen der einzelnen Mitnehmer an dem Zugelement. Der Transportabstand ist hier als der Abstand benachbarter Behälter, genauer der Abstand zwischen den einzelnen Berührpunkten oder auch Kontaktpunkten von einem zu transportierenden Behälter mit einem Mitnehmer definiert. Die Form der Mitnehmer unterscheidet sich im Wesentlichen in der senkrechten Verschiebung des Berührpunktes bezüglich einer Referenzachse, die senkrecht zu dem Zugelement liegt (in einer zweidimensionalen Ansicht) und durch den Befestigungspunkt des Mitnehmers mit dem Zugelement läuft. Aufgrund dieser senkrechten Verschiebung ändert sich auch der Abstand zwischen Befestigungspunkt und Berührpunkt, welcher für jeden einzelnen Mitnehmer variieren kann. Durch die Verschiebung des Berührpunkts in Richtung der Behälterquelle hier Bewegungsrichtung der Mitnehmer, kann der Transportabstand verkleinert werden, wenn sich dieser aufgrund der nicht konstanten Teilung vergrössert hat. Im Gegensatz dazu kann eine senkrechte Verschiebung des Berührpunkts entgegen der Bewegungsrichtung der Behälter zu einer Vergrösserung des Transportabstands führen. Mit diesen verschieden formgestalteten Mitnehmern, sprich der senkrechten Verschiebung des Berührpunkts als eine Folge der unterschiedlichen Formgestalt, können Abweichungen zu dem geforderten Transportabstand ausgeglichen beziehungsweise korrigiert werden.

Die Erfindung ermöglicht so insbesondere eine Steigerung der Flexibilität in Bezug auf das Zugmittel, da nun der Abstand der geführten Behälter konstant gehalten wird, aufgrund der unterschiedlichen Formgestalt der Mitnehmer, womit die grobe Einschränkung durch die verfügbaren Teilungen behoben wird. Dies garantiert einen sauberen Übergang der Dosen auf die Hubstationen. Des Weiteren können nun andere Zugelemente benutzt werden, die nicht die Anforderung an die spezifische Kettenteilung erfüllen. Somit beseitigt dieses Unterscheidungsmerkmal die Nachteile des Stands der Technik DE 4236784 A1, wo im Gegensatz zur Erfindung der Transportabstand durch die über Jahre evaluierte Teilung an der Kette konstant bleibt und nicht durch die verschieden formgestalteten Mitnehmer Vielzahlen.

Besonders bevorzugt kann die erste Vielzahl von Mitnehmern eine Vielzahl von unterschiedlichen Mitnehmerarten umfassen, wobei die unterschiedlichen Mitnehmerarten eine voneinander abweichende Form aufweisen. Hierbei unterscheidet sich der Abstand zwischen den nebeneinander entlang der Transportstrecke geführten Behältern vom ersten Befestigungsabstand einer jeden Mitnehmerart.

Die Form der unterschiedlichen Mitnehmerarten kann sich durch einen Abstand des Berührpunktes der Mitnehmer mit dem Behälter zu dem Befestigungspunkt entlang einer Bewegungsrichtung des Zugelementes unterscheiden. Die Form der ersten und zweiten Vielzahl von Mitnehmern kann sich auch durch einen Abstand des Berührpunktes der Mitnehmer mit dem Behälter zu dem Befestigungspunkt entlang einer Bewegungsrichtung des Zugelementes unterscheidet. D.h. insbesondere auch, dass ein direkter Abstand zwischen Berührpunkt und Befestigungspunkt bei der ersten und zweiten Vielzahl von Mitnehmern und den verschiedenen Mitnehmerarten abweicht.

In Ausführung der Erfindung kann der erste Befestigungsabstand von dem zweiten Befestigungsabstand verschieden sein, sodass insbesondere der erste Befestigungsabstand kleiner als der zweite Befestigungsabstand ist.

Gemäss einer weiteren Ausführung kann mindestens ein Mitnehmer der zweiten Vielzahl von Mitnehmern direkt neben einem Mitnehmer der ersten Vielzahl von Mitnehmern angeordnet sein sowie mindestens ein Mitnehmer der ersten Vielzahl direkt neben einem weiteren Mitnehmer der ersten Vielzahl angeordnet sein. Hierbei bedeutet «direkt neben» insbesondere unmittelbar nebeneinander, das heisst, dass sich kein anderer Mitnehmer dazwischen befindet.

Das erfindungsgemässe Behälterzuführsystem kann Mitnehmer umfassen, die derart gekrümmt sind, dass die Behälter bei einer Bewegung entlang der Transportstrecke durch den Mitnehmer stabilisiert werden. Insbesondere können die Vielzahlen von Mitnehmer als Finger ausgestaltet sein.

Das erfindungsgemässe Behälterzuführsystem umfasst eine Führung entlang der Transportstrecke. Die Mitnehmer sind dabei derart an der Führung angeordnet, dass die Mitnehmer durch das Zugelement gleitend entlang einer ersten Oberfläche der Führung bewegbar sind und werden so von der Führung entlang der Transportstrecke geleitet. Die Mitnehmer sind also gleitend an der Führung angeordnet und verhindern so, dass im Betriebszustand entstehende Erschütterungen auf die Behälter übertragen werden.

Besonders bevorzugt kann der Mitnehmer ein Gleitelement mit mindestens einer ersten Gleitfläche umfassen. Hierbei ist die Gleitfläche an der ersten Oberfläche angeordnet, sodass der Mitnehmer über das Gleitelement gleitend entlang der ersten Oberfläche der Führung bewegbar ist.

Die erste Gleitfläche kann in einer bevorzugten Ausführungsform der Erfindung eine erste Auflagefläche sein, welche derart auf der ersten Oberfläche aufliegt (also auf der Führung abgestützt ist), dass der Mitnehmer über die Auflagefläche gleitend entlang der ersten Oberfläche der Führung bewegbar ist. Dadurch, dass die Auflagefläche auf der Führung aufliegt, stützt sich der Mitnehmer mit seinem Gewicht auf der Führung ab. Dies ermöglicht eine sehr grosse Auswahl an Zugelementen, da das Gewicht der Mitnehmer nicht durch das Zugelement getragen werden muss. Die Mitnehmer werden dabei im Betriebszustand insbesondere in einer horizontal verlaufenden Ebene geführt. So können auch die Behälter horizontal (vorzugsweise gleitend über eine Oberfläche) transportiert werden.

In Kombination mit der Ausführung mit der ersten Auflagefläche kann das Zugelement (zumindest entlang der Transportstrecke beziehungsweise der Führung) derart angeordnet sein, dass es freischwebend bewegbar ist. D.h. im Gegensatz zum Stand der Technik mit der Rollkette, welche über eine Abrollfläche geführt wird, hat das Zugelement (zumindest entlang der Transportstrecke beziehungsweise der Führung) keinen Kontakt zu einem Untergrund oder einer Abstützfläche, sondern wird ohne Kontakt «in der Luft» geführt. Das Zugelement ist in dieser Ausgestaltung nämlich mit dem Mitnehmer verbunden und somit über dem Mitnehmer auf der Führung abgestützt.

Weiter kann das Gleitelement eine zweite Gleitfläche umfassen und die zweite Gleitfläche kann derart an der Auflagefläche, insbesondere im Wesentlichen senkrecht zur Auflagefläche angeordnet sein, dass die zweite Gleitfläche gleitend entlang einer zweiten Oberfläche der Führung bewegt werden kann. Ausserdem kann das Gleitelement eine dritte Gleitfläche umfassen und die dritte Gleitfläche derart an der Auflagefläche, insbesondere im Wesentlichen senkrecht zur Auflagefläche und von der zweiten Gleitfläche beanstandet angeordnet sein, dass die dritte Gleitfläche gleitend entlang einer dritten Oberfläche der Führung bewegt werden kann. In der Praxis ist es dabei besonders bevorzugt, wenn das Gleitelement eine zur Führung korrespondierende Form aufweist. So kann das Gleitelement eine Aussparung aufweisen, welche derart zu der Form der Führung korrespondiert, dass die Aussparung auf der Führung angeordnet werden kann (beziehungsweise ist) und die Gleitflächen, welche die Aussparung umgeben, an der Führung angeordnet werden. Zum Beispiel kann die Führung einen rechteckigen Querschnitt aufweisen und das Gleitelement eine Aussparung mit einem rechteckigen Querschnitt. Die zweite und dritte Gleitfläche können dabei Seitenflächen sein, welche die Bewegung des Gleitelementes an der Führung seitlich begrenzen.

Ausserdem kann der Mitnehmer derart an der Führung angeordnet sein, dass der Mitnehmer ausschliesslich gleitend entlang der Führung bewegbar ist, d.h. zwischen Mitnehmer und Führung (beziehungsweise zwischen Gleitelement und Führung) findet nur ein gleitender Kontakt statt, indem die sich berührenden Oberflächen des Mitnehmers / Gleitelementes und der Führung aufeinander gleiten. Es findet also kein weiterer Kontakt, z.B. durch ein rollendes Element statt. Dies ist vorteilhaft, da weitere Elemente zu einer komplizierten Vorrichtung mit mehr Toträumen führt.

Das Gleitelement kann ein vom Mitnehmer separates und am Mitnehmer befestigtes (zum Beispiel durch eine Schraubverbindung) Element sein, welches zwischen dem Mitnehmer und der Führung angeordnet ist. Alternativ können das Gleitelement und der Mitnehmer aus einem Stück gefertigt sein, sodass das Gleitelement ein integrales Element des Mitnehmers ist.

Die Erfindung betrifft weiter eine Verarbeitungsvorrichtung zur Verarbeitung eines Behälters, umfassend eine Behälterquelle, einen Behälterempfänger sowie das erfindungsgemässe Behälterzuführsystem. Dabei ist der Behälter mittels des Behälterzuführsystems von der Behälterquelle zum Behälterempfänger transportierbar.

In der Praxis kann die Behälterquelle zum Beispiel ein an sich aus dem Stand der Technik bekannter Behälterspender zum Bereitstellen leerer Behälter sein und / oder der Behälterempfänger kann in Form einer Füllstation zum Befüllen des Behälters mit einem Füllgut ausgestaltet sein. Selbstverständlich kann die Behälterquelle auch in Form einer Füllstation zum Befüllen des Behälters mit einem Füllgut ausgestaltet sein und / oder der Behälterempfänger ist in Form eines Verschliessmoduls zum Verschliessen des Behälters mittels eines Deckels realisiert.

Insbesondere kann die Füllstation parallel als Behälterempfänger und als Behälterspender fungieren. Der Füllstation werden die leeren Behälter von einem entsprechenden Behälterspender in bestimmten Fällen eventuell mittels des erfindungsgemässen Behälterzuführsystems zugeführt, die Behälter werden sodann in der Füllstation mit einem Füllgut befüllt, wobei der gefüllte Behälter dann an ein weiteres erfindungsgemässes Behälterzuführsystem der Verarbeitungsvorrichtung übergeben wird, dass den gefüllten Behälter schliesslich zu einem Verschliessmodul befördert und diesem den Behälter zum Verschliessen übergibt. Es versteht sich, dass die Transportstrecke in allen Ausführungsbeispielen mindestens einen geraden Abschnitt und mindestens einen gekrümmten Abschnitt umfassen kann. Für die Ausführungsbeispiele, die eine Führung umfassen, gilt, dass auch die Führung mindestens einen geraden Abschnitt und mindestens einen ungeraden Abschnitt aufweisen kann.

Die Erfindung betrifft schliesslich auch ein Verfahren zum Transport eines Behälters von einer Behälterquelle zu einem Behälterempfänger mittels eines erfindungsgemässen Behälterzuführsystems, insbesondere ein Verfahren zum Transport eines Behälters unter Verwendung einer erfindungsgemässen Verarbeitungsvorrichtung, wobei das Behälterzuführsystem zwischen einem Aufnahmebereich und einem Übergabebereich zwischen der Behälterquelle und dem Behälterempfänger angeordnet ist. Dabei wird der Behälter mittels des am Behälterzuführsystem vorgesehenen Mitnehmers, der insbesondere ausschliesslich gleitend entlang der ersten Oberfläche bewegt wird, im Aufnahmebereich aufgenommen und zum Übergabebereich transportiert. Der Behälterempfänger umfasst ein Verschliessmodul, welches eine Befüllvorrichtung umfasst und den Behälter so zunächst befüllen, mit einem Schutzgas begasen und schliesslich verschliessen kann. Erfindungsgemäss kann dieses Verschliessen mittels eines Deckels erfolgen.

Im Rahmen der Erfindung wird ein erfindungsgemässes Behälterzuführsystem bzw. eine Verarbeitungsvorrichtung oder ein Verfahren zum Transport von Behälter gemäss der vorliegenden Erfindung besonders vorteilhaft in der Lebensmittelindustrie verwendet, wobei als Behälter bevorzugt Getränke- oder Konservendosen verwendet werden und die einzelne Getränke- bzw. Konservendose mit einem Lebensmittel befüllt wird.

In der Praxis können bekannte Dosenverschliesser / Verschliesser oder Füller mit der erfindungsgemässen Behälterzuführsystem modifiziert werden, um so die Nachteile des Standes der Technik zu vermeiden.

Im Folgenden wird die Erfindung anhand der schematischen Zeichnungen näher erläutert. Sie zeigen:
- Fig. 1: ein aus dem Stand der Technik bekanntes Zuführsystem;
- Fig. 2: ein Verschliessmodul mit einem erfindungsgemässen Behälterzuführsystem;
- Fig. 3: eine schematische Ansicht eines erfindungsgemässen Behälterzuführsystems zwischen einem Behälterempfänger und einer Behälterquelle;
- Fig. 4: ein Ausschnitt eines erfindungsgemässen Behälterzuführsystems;
- Fig. 5: eine schematische Ansicht eines Ausschnitts eines aus dem Stand der Technik bekannten Zugelements mit spezifischer Teilung;
- Fig. 6: eine schematische Ansicht von erfindungsgemässen Mitnehmern an einem Zahnriemen mit ungleicher Teilung.

Fig. 1 wurde bereits vorangehend mit Bezug auf den Stand der Technik erläutert.

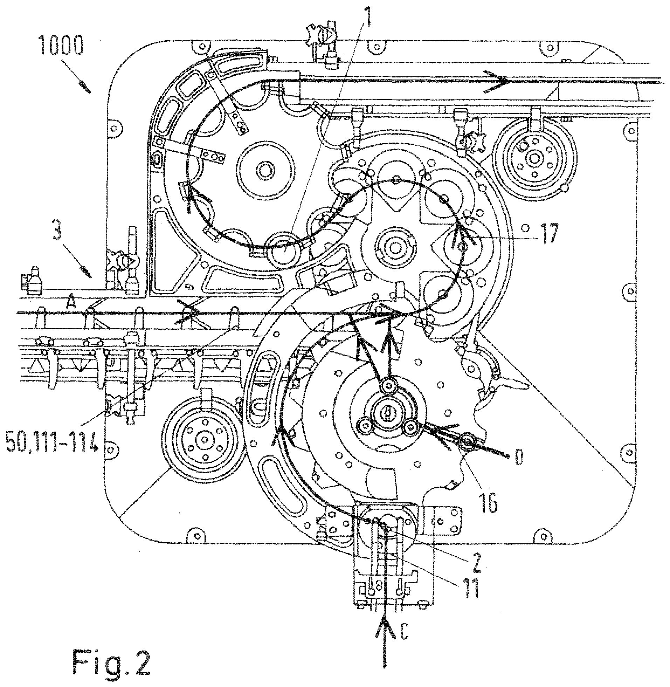

Fig. 2 zeigt ein Verschliessmodul in Form eines Dosenverschliessers 1000 mit einem erfindungsgemässen Behälterzuführsystem 3. Bei der Abfüllung von Getränkedosen oder Lebensmitteldosen durchlaufen die Dosen 1 nach der Befüllung mit dem Getränk oder dem Lebensmittel einen Dosenverschliesser 1000, wobei die befüllten Dosenkörper entlang der Transportstrecke über einen Zuführweg A mittels des Behälterzuführsystems 3 einlaufen, indem sie durch Mitnehmer 50, 111-114 geführt werden. Über einen weiteren Zuführweg C laufen Dosendeckel 2 durch die Deckelzuführung 11 ein.

Der Dosenverschliesser 1000 weist mehrere karussellförmig angeordnete gleichartige Stationen 17 auf, in denen jeweils eine Dose 1 mit einem Dosendeckel 2 verschlossen wird. Die Dosendeckel 2 werden dabei auf die Dose 1 geführt, wobei die Dosen 1 entlang des Pfeiles D mit der Gaszufuhr 16 begast werden. Die Dosendeckel 2 werden anschliessend auf der Dose 1 gehalten, wobei das Halten der Fixierung der Dosen 1 gegen ein Ausbrechen aus der von den Dosen 1 in dem Dosenverschliesser 1000 durchlaufenen Kreisbahn aufgrund der Zentrifugalkraft dient.

In dem Dosenverschliesser 1000 werden dabei die Dosen 1 mit dem Dosendeckel 2 randseitig über eine Falzrolle gefalzt und somit verschlossen. In der Regel wird die Dose 1 mit dem Dosendeckel 2 dabei mittels des Falzkopfes zusätzlich um die eigene Symmetrieachse rotiert.

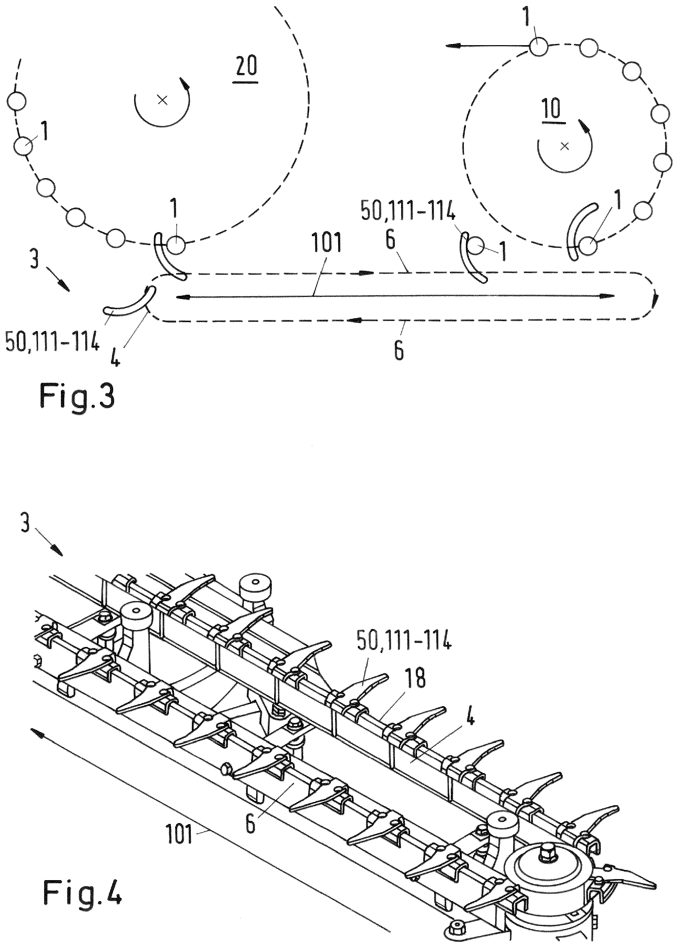

Fig. 3 zeigt das schematische Zusammenwirken von Behälterquelle 20, Transportstrecke 101 und Behälterempfänger 10. Die Behälter 1 werden in einem Aufnahmebereich von den Mitnehmern 50, 111-114 aufgenommen, durch die Mitnehmer 50, 111-114 entlang der Transportstrecke 101 zum Übergabebereich transportiert, wo die Behälter 1 vom Behälterempfänger 10 aufgenommen werden. In der Ausführung gemäss Fig. 3 ist das Zugelement 4 als umlaufendes Zugelement ausgestaltet. Es gibt zwei Führungen 6, welche sich in einem geraden Bereich entlang der Transportstrecke 101 erstrecken.

Fig. 4 zeigt einen Ausschnitt des Behälterzuführsystems 3 zum Transport des Behälters entlang der Transportstrecke 101 von der Behälterquelle zu dem Behälterempfänger. Der Behälter kann dabei insbesondere eine Dose sein. Die Aufnahme des Behälters von der Behälterquelle und der Transport zum Behälterempfänger erfolgt dabei über eine erste und zweite Vielzahl von Mitnehmern 50, 111-114, die als Finger ausgestaltet und voneinander unterschiedlich formgestaltet sind. Die Mitnehmer 50, 111-114 sind mit einem Zugelement 4 in Form eines Zahnflachriemens 4 verbunden und werden durch diesen angetrieben, sodass der Mitnehmer 50, 111-114 entlang der Transportstrecke 101 bewegt werden können. Entlang der Transportstrecke 101 ist zudem die Führung 6 angeordnet, die dazu dient, die Mitnehmer 50, 111-114 entlang der Transportstrecke 101 zu führen. Die Mitnehmer 50, 111-114 sind dabei derart an der Führung 6 angeordnet, dass sie durch das Zugelement 4 gleitend auf einer ersten Oberfläche 18 der Führung 6 bewegbar sind und so entlang der Transportstrecke 101 geführt werden.

In Fig. 5 lässt sich ein schematischer Ausschnitt einer aus dem Stand der Technik bekannten Kette 4' mit einer gängigen Kettenteilung 40' von 92 mm erkennen. Dabei entspricht ein Transportabstand 8' zwischen den Behältern 1' jeweils einem n-fachen der Kettenteilung, in diesem Fall ist n=2 und benötigt zwei Glieder, um die gleiche Teilung 40' zu erlangen. Der Behälter 1' wird durch die Mitnehmer 4a' entlang der Transportstrecke bewegt. Ersichtlich ist aus der schematischen Ansicht, dass die Mitnehmer 4a' alle gleich formgestaltet sind, da alleine durch die Kettenteilung 40' der Transportabstand 8' konstant gehalten wird.

Fig.6 beschreibt einen schematischen Ausschnitt eines erfindungsgemässen Ausführungsbeispiels mit der Anordnung der verschiedenen Mitnehmer Vielzahlen sowie den definierten Abständen. Hierbei repräsentieren die Mitnehmer 111-114 die erste Vielzahl von Mitnehmern und Mitnehmer 50 die zweite Vielzahl von Mitnehmern. Diese Vielzahlen von Mitnehmern sind an dem Zahnriemen 4 an jeweils einem Befestigungspunkt P angeordnet und dienen zum Transport der Behälter 1 entlang der Transportstrecke, die jeweils einen Berührpunkt mit dem Mitnehmer aufweisen. Um einen Transportabstand 8 von 92 mm zu erhalten, wird ein Zahnriemen 4 mit einer Zahnteilung 9 von 10 mm wie folgt aufgebaut:
Bei diesem Beispiel befinden sich die Positionen zur Befestigung der Mitnehmer im Abstand von 4-mal 90 mm (erster Befestigungsabstand 100) und 1-mal 100 mm (zweiter Befestigungsabstand 110) voneinander. Dies ergibt eine totale Distanz von 460mm pro Segment 12. Diese Segmente 12 wiederholen sich über die ganze Länge des Zahnriemens 4, der ein n-faches der Segmentlänge sein muss. Zudem ist die Segmentlänge 12 ein Vielfaches des Transportabstands 8.

Aufgrund der unterschiedlichen Befestigungsabstände benötigt man eine unterschiedliche Formgestaltung der einzelnen Vielzahlen von Mitnehmer 50, 111-114 und Mitnehmerarten 111-114, um einen Transportabstand 8 von 92 mm zu gewährleisten. In diesem Fall umfasst eine Segmentlänge 12 fünf unterschiedliche Mitnehmer, vier Mitnehmer(arten) von der ersten Vielzahl von Mitnehmern 111-114 und ein Mitnehmer der zweiten Vielzahl von Mitnehmern 50. Diese Anzahl von Mitnehmern ergibt sich aus dem Quotienten der Segmentlänge 12 und dem Transportabstand 8. Des Weiteren unterscheiden sich die Mitnehmer der ersten Vielzahl von Mitnehmern 111-114 in ihrer Formgestalt und ist von dem Mitnehmer der zweiten Vielzahl von Mitnehmern 50 formverschieden. Der Abstand von den einzelnen Berührpunkten zu den Behältern 1 bleibt dabei jeweils konstant. Auf der anderen Seite ändert sich allerdings der Abstand zwischen Berührpunkt und dem Befestigungspunkt am Zahnriemen 4, sodass ein Transportabstand 8 von 92 mm gewährleistet wird.

Es versteht sich, dass die diskutierten speziellen Ausführungsbeispiele der Erfindung lediglich exemplarisch zu verstehen sind und die Erfindung selbstverständlich nicht auf diese allein beschränkt ist. Insbesondere versteht der Fachmann, dass die beschriebenen Ausführungsbeispiele in jeder geeigneten Art und Weise kombinierbar sind und auch dem Fachmann naheliegende einfache Weiterbildungen vom beanspruchten Schutzumfang selbstverständlich umfasst sind.

## Patentansprüche

1. Behälterzuführsystem zum Transport von Behältern (1) entlang einer Transportstrecke (101) umfassend
ein Zugelement (4) das entlang der Transportstrecke (101) bewegbar ist und eine erste Vielzahl von Mitnehmern (111-114),
wobei das Behälterzuführsystem (3) weiter eine zweite von der ersten unterschiedliche Vielzahl von Mitnehmern (50) umfasst, wobei die erste Vielzahl von Mitnehmern (111-114) und die zweite Vielzahl von Mitnehmern (50) dergestalt verteilt an Befestigungspunkten (P) des Zugelements (4) angeordnet sind, dass die Behälter (1) bei der Bewegung des Zugelementes (4) durch die erste Vielzahl von Mitnehmern (111-114) und die zweite Vielzahl von Mitnehmern (50) aufnehmbar und entlang der Transportstrecke (101) transportierbar sind,
wobei die Befestigungspunkte (P) von zwei nebeneinander an dem Zugelement (4) angeordneten Mitnehmern (111-114) der ersten Vielzahl einen ersten Befestigungsabstand (100) aufweisen und die Befestigungspunkte (P) von einem Mitnehmer (111-114) der ersten Vielzahl und einem neben dem Mitnehmer (111-114) der ersten Vielzahl an dem Zugelement (4) angeordneten Mitnehmer (50) der zweiten Vielzahl einen zweiten Befestigungsabstand (110) aufweisen,
wobei die Mitnehmer (50) der zweiten Vielzahl eine derart von den Mitnehmern (111-114) der ersten Vielzahl abweichende Form aufweisen, dass ein Transportabstand zwischen nebeneinander entlang der Transportstrecke (101) führbaren Behältern (1) unabhängig von dem ersten Befestigungsabstand (100) und dem zweiten Befestigungsabstand (110) konstant ist, **dadurch gekennzeichnet, dass** das Behälterzuführsystem weiter eine entlang der Transportstrecke (101) angeordnete Führung (6) zum Führen der Mitnehmer (50, 111-114) entlang der Transportstrecke (101) umfasst, und dass die Mitnehmer (50, 111-114) derart an der Führung (6) angeordnet sind, dass die Mitnehmer (50, 111-114) durch das Zugelement (4) gleitend entlang einer ersten Oberfläche (18) der Führung (6) bewegbar sind.

2. Behälterzuführsystem nach Anspruch 1, wobei die erste Vielzahl von Mitnehmern (111-114) eine Vielzahl von unterschiedlichen Mitnehmerarten aufweist, wobei die unterschiedlichen Mitnehmerarten eine derart voneinander abweichende Form aufweisen, dass der Transportabstand (8) zwischen nebeneinander entlang der Transportstrecke (101) führbaren Behältern (1) sich vom ersten Befestigungsabstand (100) unterscheidet.

3. Behälterzuführsystem nach Anspruch 2, wobei sich die Form der unterschiedlichen Mitnehmerarten durch einen Abstand eines Berührpunktes der Mitnehmer mit dem Behälter (1) zu dem Befestigungspunkt (P) entlang einer Bewegungsrichtung des Zugelement (4) unterscheidet.

4. Behälterzuführsystem nach einem der vorangegangenen Ansprüche, wobei sich der erste Befestigungsabstand (100) von dem zweiten Befestigungsabstand (110) unterscheidet, insbesondere der erste Befestigungsabstand (100) kleiner als der zweite Befestigungsabstand (110) ist, besonders bevorzugt 1 mm bis 20 mm kleiner und im speziellen 1 mm bis 10 mm kleiner ist.

5. Behälterzuführsystem nach einem der vorangegangenen Ansprüche, wobei sich die Form der ersten und zweiten Vielzahl von Mitnehmern (50, 111-114) durch einen Abstand eines Berührpunktes der Mitnehmer mit dem Behälter (1) zu dem Befestigungspunkt (P) entlang einer Bewegungsrichtung des Zugelement (4) unterscheidet.

6. Behälterzuführsystem nach einem der vorangegangenen Ansprüche, wobei das Zugelement (4) ein Zahnriemen (4) ist.

7. Behälterzuführsystem nach einem der vorangegangenen Ansprüche, wobei der erste Befestigungsabstand (100) 85mm - 94mm, insbesondere 89 mm - 91mm und im speziellen 90mm beträgt.

8. Behälterzuführsystem nach einem der vorangegangenen Ansprüche, wobei der zweite Befestigungsabstand (110) 95 mm - 105 mm, insbesondere 98 mm - 101 mm und im speziellen 100 mm beträgt.

9. Behälterzuführsystem nach einem der vorangegangenen Ansprüche, wobei der Transportabstand (8) 80 mm - 100mm, insbesondere 85 - 95 mm und im speziellen 92 mm beträgt.

10. Behälterzuführsystem nach einem der vorangegangenen Ansprüche, wobei mindestens ein Mitnehmer der zweiten Vielzahl von Mitnehmern (50) neben einem Mitnehmer der ersten Vielzahl von Mitnehmern (111-114) angeordnet ist und mindestens ein Mitnehmer der ersten Vielzahl (111-114) neben einem weiteren Mitnehmer der ersten Vielzahl (111-114) angeordnet ist.

11. Behälterzuführsystem nach einem der vorangegangenen Ansprüche, wobei die Mitnehmer (50, 111-114) derart gekrümmt sind, dass der Behälter (1) bei Bewegung durch den Mitnehmer (50, 111-114) stabilisiert wird.

12. Behälterzuführsystem nach einem der vorangegangenen Ansprüche, wobei die Mitnehmer (50, 111-114) ein Gleitelement mit mindestens einer ersten Gleitfläche umfassen und die Gleitfläche an der ersten Oberfläche (18) angeordnet ist, sodass die Mitnehmer (50, 111-114) über das Gleitelement gleitend entlang der ersten Oberfläche (18) der Führung (6) bewegbar sind.

13. Verarbeitungsvorrichtung zur Verarbeitung eines Behälters (1) umfassend eine Behälterquelle (20), einen Behälterempfänger (10), sowie ein Behälterzuführsystem (3) nach einem der vorangehenden Ansprüche, welches zum Transport des Behälters (1) von der Behälterquelle (20) zum Behälterempfänger (10) zwischen der Behälterquelle (20) und dem Behälterempfänger (10) angeordnet ist.

14. Verfahren zum Transport von Behältern, umfassend:
Bereitstellen eines Behälterzuführsystem (3) nach einem der Ansprüche 1 bis 12;
Aufnehmen des Behälters (1) durch den Mitnehmer (50, 111-114) in einem Aufnahmebereich von der Behälterquelle (20),
Transportieren des Behälters (1) durch den Mitnehmer (50, 111-114) entlang der Transportstrecke (101) und
Abgeben des Behälters (1) an den Behälterempfänger (10) in einem Übergabebereich.

## Claims

1. A container feed system for the transport of containers (1) along a transport path (101) comprising
a pulling element (4) which can be moved along the transport path (101) and a first plurality of carriers (111-114),
wherein the container feed system (3) further comprises a second plurality of carriers (50) different from the first plurality, wherein the first plurality of carriers (111-114) and the second plurality of carriers (50) are arranged distributed at fastening points (P) of the pulling element (4) in such a way that the containers (1) can be received and transported along the transport path (101) by the first plurality of carriers (111-114) and the second plurality of carriers (50) during the movement of the pulling element (4),
wherein the fastening points (P) of two carriers (111-114) of the first plurality arranged side by side on the pulling element (4) have a first fastening distance (100) and the fastening points (P) of one carrier (111-114) of the first plurality and one carrier (50) of the second plurality arranged on the pulling element (4) next to the carrier (111-114) of the first plurality have a second fastening distance (110),
wherein the carriers (50) of the second plurality have a shape differing from the carriers (111-114) of the first plurality in such a way that a transport distance between containers (1) that can be guided side by side along the transport path (101) is constant irrespective of the first fastening distance (100) and the second fastening distance (110), **characterized in that** the container feed system comprises a guide (6) arranged along the transport path (101) for guiding the carriers (50, 111-114) along the transport path (101), wherein the carriers (50, 111-114) are arranged on the guide (6) in such a way that the carriers (50, 111-114) can be moved in a sliding manner along a first surface (18) of the guide (6) by the pulling element (4).

2. The container feed system according to claim 1, wherein the first plurality of carriers (111-114) has a plurality of different types of carriers, wherein the different types of carriers have a shape differing from each other in such a way that the transport distance (8) between containers (1) that can be guided side by side along the transport path (101) differs from the first fastening distance (100).

3. The container feed system according to claim 2, wherein the shape of the different types of carriers differs by a distance of a contact point of the carriers with the container (1) to the fastening point (P) along a moving direction of the pulling element (4).

4. The container feed system according to any one of the preceding claims, wherein the first fastening distance (100) differs from the second fastening distance (110), in particular the first fastening distance (100) is smaller than the second fastening distance (110), particularly preferably 1 mm to 20 mm smaller and especially 1 mm to 10 mm smaller.

5. The container feed system according to any one of the preceding claims, wherein the shape of the first and second plurality of carriers (50, 111-114) differs by a distance of a contact point of the carriers with the container (1) to the fastening point (P) along a moving direction of the pulling element (4).

6. The container feed system according to any one of the preceding claims, wherein the pulling element (4) is a toothed belt (4).

7. The container feed system according to any one of the preceding claims, wherein the first fastening distance (100) is 85 mm - 94 mm, in particular 89 mm - 91 mm and especially 90 mm.

8. The container feed system according to any one of the preceding claims, wherein the second fastening distance (110) is 95 mm - 105 mm, in particular 98 mm - 101 mm and especially 100 mm.

9. The container feed system according to any one of the preceding claims, wherein the transport distance (8) is 80 mm - 100 mm, in particular 85 - 95 mm and especially 92 mm.

10. The container feed system according to any one of the preceding claims, wherein at least one carrier of the second plurality of carriers (50) is arranged next to a carrier of the first plurality of carriers (111-114) and at least one carrier of the first plurality (111-114) is arranged next to another carrier of the first plurality (111-114).

11. The container feed system according to any one of the preceding claims, wherein the carriers (50, 111-114) are curved in such a way that the container (1) is stabilized by the carrier (50, 111-114) during movement.

12. The container feed system according to any one of the preceding claims, wherein the carriers (50, 111-114) comprise a sliding element having at least a first sliding surface, and the sliding surface is arranged on the first surface (18) such that the carriers (50, 111-114) can be moved via the sliding element in a sliding manner along the first surface (18) of the guide (6).

13. A processing device for processing a container (1) comprising a container source (20), a container receiver (10), and a container feed system (3) according to any one of the preceding claims, which is arranged between the container source (20) and the container receiver (10) for the transport of the container (1) from the container source (20) to the container receiver (10).

14. A method for the transport of containers (1), comprising:
providing a container feed system (3) according to any one of the claims 1 to 12;
receiving the container (1) by the carrier (50, 111-114) in a receiving area from the container source (20),
transporting the container (1) by the carrier (50, 111-114) along the transport path (101), and
delivering the container (1) to the container receiver (10) in a transfer area.

## Revendications

1. Système d'amenée de récipients pour le transport de récipients (1) le long d'une voie de transport (101), comprenant
un élément de traction (4) qui peut être déplacé le long de la voie de transport (101) et une première pluralité d'éléments d'entraînement (111-114), le système d'amenée de récipients (3) comprenant en outre une deuxième pluralité d'éléments d'entraînement (50) différente de la première, la première pluralité d'éléments d'entraînement (111-114) et la deuxième pluralité d'éléments d'entraînement (50) étant disposées de manière répartie au niveau de points de fixation (P) de l'élément de traction (4) de telle sorte que les récipients (1) puissent être reçus lors du déplacement de l'élément de traction (4) par la première pluralité d'éléments d'entraînement (111-114) et la deuxième pluralité d'éléments d'entraînement (50) et puissent être transportés le long de la voie de transport (101),
les points de fixation (P) de deux éléments d'entraînement (111-114) de la première pluralité disposés l'un à côté de l'autre au niveau de l'élément de traction (4) présentant une première distance de fixation (100) et les points de fixation (P) d'un élément d'entraînement (111-114) de la première pluralité et d'un élément d'entraînement (50) de la deuxième pluralité disposé à côté de l'élément d'entraînement (111-114) de la première pluralité au niveau de l'élément de traction (4) présentant une deuxième distance de fixation (110), les éléments d'entraînement (50) de la deuxième pluralité présentant une forme différente des éléments d'entraînement (111-114) de la première pluralité de telle sorte qu'une distance de transport entre des récipients (1) pouvant être guidés l'un à côté de l'autre le long de la voie de transport (101) soit constante indépendamment de la première distance de fixation (100) et de la deuxième distance de fixation (110), **caractérisé en ce que** le système d'amenée de récipients comprend en outre un guide (6) disposé le long de la voie de transport (101) pour guider les éléments d'entraînement (50, 111-114) le long de la voie de transport (101), et **en ce que** les éléments d'entraînement (50, 111-114) sont disposés au niveau du guide (6) de telle sorte que les éléments d'entraînement (50, 111-114) puissent être déplacés par l'élément de traction (4) de manière coulissante le long d'une première surface (18) du guide (6).

2. Système d'amenée de récipients selon la revendication 1, la première pluralité d'éléments d'entraînement (111-114) présentant une pluralité de différents types d'éléments d'entraînement, les différents types d'éléments d'entraînement présentant une forme différente les uns des autres de telle sorte que la distance de transport (8) entre des récipients (1) pouvant être guidés l'un à côté de l'autre le long de la voie de transport (101) soit différente de la première distance de fixation (100).

3. Système d'amenée de récipients selon la revendication 2, la forme des différents types d'éléments d'entraînement étant différente par une distance d'un point de contact des éléments d'entraînement avec le récipient (1) au point de fixation (P) le long d'une direction de déplacement de l'élément de traction (4).

4. Système d'amenée de récipients selon l'une quelconque des revendications précédentes, la première distance de fixation (100) étant différente de la deuxième distance de fixation (110), en particulier la première distance de fixation (100) étant inférieure à la deuxième distance de fixation (110), de manière particulièrement préférée inférieure de 1 mm à 20 mm et en particulier inférieure de 1 mm à 10 mm.

5. Système d'amenée de récipients selon l'une quelconque des revendications précédentes, la forme de la première et de la deuxième pluralité d'éléments d'entraînement (50, 111-114) étant différente par une distance d'un point de contact des éléments d'entraînement avec le récipient (1) au point de fixation (P) le long d'une direction de déplacement de l'élément de traction (4).

6. Système d'amenée de récipients selon l'une quelconque des revendications précédentes, l'élément de traction (4) étant une courroie dentée (4).

7. Système d'amenée de récipients selon l'une quelconque des revendications précédentes, la première distance de fixation (100) étant de 85 mm à 94 mm, en particulier de 89 mm à 91 mm et en particulier de 90 mm.

8. Système d'amenée de récipients selon l'une quelconque des revendications précédentes, la deuxième distance de fixation (110) étant de 95 mm à 105 mm, en particulier de 98 mm à 101 mm et en particulier de 100 mm.

9. Système d'amenée de récipients selon l'une quelconque des revendications précédentes, la distance de transport (8) étant de 80 mm à 100 mm, en particulier de 85 à 95 mm et en particulier de 92 mm.

10. Système d'amenée de récipients selon l'une quelconque des revendications précédentes, au moins un élément d'entraînement de la deuxième pluralité d'éléments d'entraînement (50) étant disposé à côté d'un élément d'entraînement de la première pluralité d'éléments d'entraînement (111-114) et au moins un élément d'entraînement de la première pluralité (111-114) étant disposé à côté d'un autre élément d'entraînement de la première pluralité (111-114).

11. Système d'amenée de récipients selon l'une quelconque des revendications précédentes, les éléments d'entraînement (50, 111-114) étant courbés de telle sorte que le récipient (1) soit stabilisé lors du déplacement par l'élément d'entraînement (50, 111-114).

12. Système d'amenée de récipients selon l'une quelconque des revendications précédentes, les éléments d'entraînement (50, 111-114) comprenant un élément coulissant avec au moins une première surface de glissement et la surface de glissement étant disposée au niveau de la première surface (18) de telle sorte que les éléments d'entraînement (50, 111-114) puissent être déplacés par l'intermédiaire de l'élément coulissant de manière coulissante le long de la première surface (18) du guide (6).

13. Dispositif de traitement pour le traitement d'un récipient (1), comprenant une source de récipient (20), un récepteur de récipient (10) ainsi qu'un système d'amenée de récipients (3) selon l'une quelconque des revendications précédentes, lequel est disposé entre la source de récipient (20) et le récepteur de récipient (10) pour le transport du récipient (1) de la source de récipient (20) au récepteur de récipient (10).

14. Procédé pour le transport de récipients, comprenant :
la fourniture d'un système d'amenée de récipients (3) selon l'une quelconque des revendications 1 à 12 ;
la réception du récipient (1) par l'élément d'entraînement (50, 111-114) dans une zone de réception de la source de récipient (20),
le transport du récipient (1) par l'élément d'entraînement (50, 111-114) le long de la voie de transport (101) et
la remise du récipient (1) au récepteur de récipient (10) dans une zone de transfert.
